# EUROPEAN PATENT SPECIFICATION

(11) **EP 1 410 162 B1**
(45) Date of publication and mention of the grant of the patent: **07.02.2007**
(21) Application number: 01999080.3
(22) Date of filing: 19.11.2001
(51) Int. Cl.: G06F 3/033

(54) **WIRELESS TERMINAL DEVICE WITH USER INTERACTION SYSTEM**
DRAHTLOSES ENDGERÄT MIT EINEM SYSTEM ZUR BENUTZERINTERAKTION
DISPOSITIF TERMINAL SANS FIL POURVU D'UN SYSTEME DE TRAITEMENT INTERACTIF

(30) Priority: 29.11.2000 US 725247
(43) Date of publication of application: 21.04.2004
(73) Proprietor: Nokia Corporation, 02150 Espoo (FI)
(72) Inventor: MANSIKKANIEMI, Tapio, FIN-02760 Espoo (FI); WILLSTEDT, Charlotta, S-212 13 Malmö (SE); DAVIDSON, Marcus, S-582 24 Linkoping (SE); PAAJANEN, Samu, FIN-00150 Helsinki (FI)
(74) Representative: Derry, Paul Stefan
(86) International application number: PCT/IB2001/002173
(87) International publication number: WO 2002/045343

(56) References cited:
- WO-A-00/11850
- US-A- 5 805 164
- US-A- 5 809 415
- US-A- 5 923 327
- HOFF ET AL: "Analysis of the General Packet Radio Service (GPRS) of GSM as access to the Internet" INTERNATIONAL CONFERENCE ON UNIVERSAL PERSONAL COMMUNICATIONS, IEEE, NEW YORK, NY, US, vol. 1, 5 October 1999 (1999-10-05), pages 415-419, XP002144950
- "PARAMETERIZED XSL STYLE SHEETS" RESEARCH DISCLOSURE, KENNETH MASON PUBLICATIONS, HAMPSHIRE, GB, no. 423, July 1999 (1999-07), pages 1009-1011, XP000889028 ISSN: 0374-4353
- BHAVEN SHAH: "Presenting XML to the Web" XML JOURNAL, XX, XX, vol. 1, no. 1, March 2000 (2000-03), pages 18-23, XP002211938 ISSN: 1534-9780

## Description

The present invention relates generally to wireless terminal devices and more particularly although not exclusively wireless terminal devices having systems for easier interaction between the user and the screen. The invention relates also to a method of selecting items.

Portable communication devices such as wireless telephones have become very popular and increasingly are able to provide much more than mere telephone access. Such devices have been developed which allow a user to access communication networks such as the Internet from their wireless device.

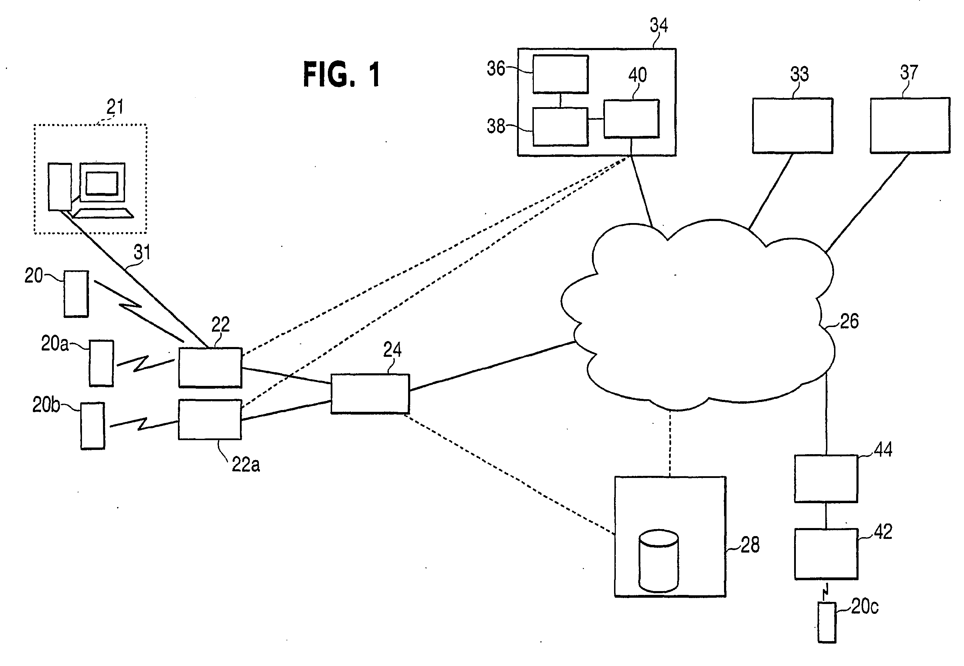

An example system useful to understanding the invention but not prior art is shown in Figure 1, where the network 10 includes terminals 20a-20c, each coupled over a wireless system to an access point 22, 42. The access point is coupled to a network e.g. owned by an operator like a server of an Internet service provider 24, 44, which is coupled to the Internet 26, In addition, the network server such as server of an Internet service provider 24 is coupled to a mobile display appliance server 28 that provides the users with specific services and features through their wireless terminals. Alternatively, the access point 22, 44 can be connected directly to server 28 via any network connection.

It is also possible that a terminal 20c outside the service area of access point 22 may be connected to server 28 by instead being in the vicinity of another access point 42, which then is connected to server 28 through e.g. Internet service provider 44, and the Internet or other network.

The access point 22 is also coupled to a global unit or server of a product vendor 34. The address of a global address registry 36 with a global unit is known by the terminal. A direct connection established between terminal via a network access point or server of Internet Service Provider 24. As according to one alternative addressing scheme to this chosen exemplary system environment of the invention, an address of a server 28 is received to terminal and the network node, where from the request to global register was made. After the terminal has knowledge of the address of the server 28, a direct link can be made from the terminal to the server. The Internet address of a global unit 34 with the global address server 36 is permanently contained in the memory of each terminal 20. The global address server is a place from which all the terminals may fetch the Internet address of their respective remote server. The initial configuration information and or the configuration of a direct link is loaded down to the terminal from the remote server in where it was stored as part of the configuration information. This information can be updated e.g. from the server of an Internet service provider, an access service provider or a mobile access provider from time to time. The configuration and the addressing of the terminal in the system as well as any direct address link configured to an user interface of the terminal is also updated down to a remote server when it is changed. The global unit 34 includes a global address server 36 and a global upgrade server 38. The vendor of the system terminal is connected either directly via network e.g. the Internet to each remote server 28 or connected in a more centralized way first to the server of the terminal vendor and from there onto each server 28.

The advantage of having the terminals store the Internet address of the global address server 36 is that if the terminal 20 is relocated near another access point, then the terminal 20 may still obtain the Internet access location of server 28 simply by knowing the Internet address of the global address server 36. It would also be possible, to instead have a system where the address of the server 28 is stored in the terminal 20 and the memory updated as needed. The server 28 authenticates, using the unique identity of the terminal 20, the access privileges of the terminal 20 to be a shared or a group access privileges. Accordingly, the terminal 20 is authenticated and logged onto the server 28 to begin a shared session at a shared or group level.

After the terminal has been authenticated and the terminal has received the downloaded configuration information of services, user interface and links configured concerning the services and the main view of the user interface. Then the terminal is ready to be used. Each terminal includes a unique identification (ID), the IDs are reserved and used by members belonging to the same group. Each of the unique identification of the terminals is recognised in the same server 28 to be used by the members of the group. Every member belonging to respective group may use same terminal. When one or more terminals each of the terminals including a unique terminal identification is switched on. Each terminal belonging to the same group makes a request from the global address server 36 with terminal unique identification receiving the address of the server 28 in which the applications and services are stored and ready to be used. Then each of the terminals belonging to the same group will get address of the same server 28 into which each of the terminals is connected. Thus, the user can now access services or retrieve information from the server 28 or the Internet 26.

In addition the terminal to be used to access and use the services of the group, can be used to access services of an individual user.

The user profile and terminal specific user interface configuration settings as well as possible software component or program update to the server 28 are controlled and done by a configuration tool manager 39 (in Fig. 1) of management server 37. Possible made configuration change may affect both the server 28 and/or the terminal(s) 20a-20c. In order for the user to initiate an individual session and retrieve individual information, the user must use the terminal 20 and provide further authentication to the server 28 to gain an access at the individual level. Either at a shared/group or at individual level, the user is able to the retrieve the information related to the group of users as well as browses the Internet 26 to retrieve information.

The mobile terminal to be used can be ordinary PC and a wireless modem being able to establish a wireless connection via a mobile service operator to the server 28, which has capability to be in connection to the network.

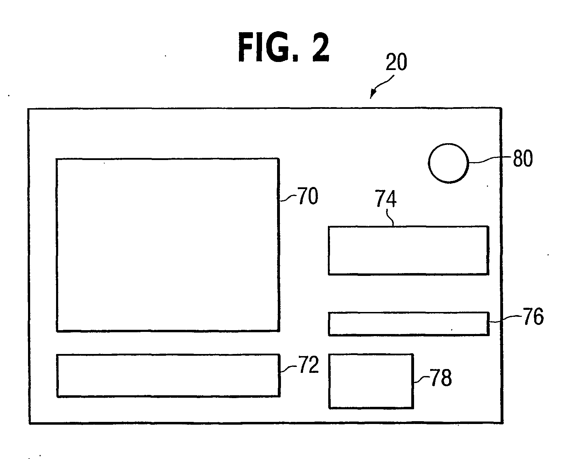

FIG. 2 is a more detailed block diagram of a terminal, which shows such application as the calendar application of on the display operating within the system shown in FIG. 1. Referring to Fig. 2, the terminal 20 includes a display 70, a user interface (UI) framework 72, a browser 74, a driver 76, and processor 78. Each element is shown here for reference only and the location of each element is not intended to be a defined location of one element relative to the other elements. For example, the user interface 72 maybe located in the display, as a part of the display, or independent of the display.

When the user access a service like a calendar service or retrieve information from the server 28 the browser 74 (in Fig. 2) is the program product that in charge to convey the service specific information and the main view of the selected application such as calendar service from the server 28 (of Fig. 1) to the terminal 20 (of Fig. 1 and 2).

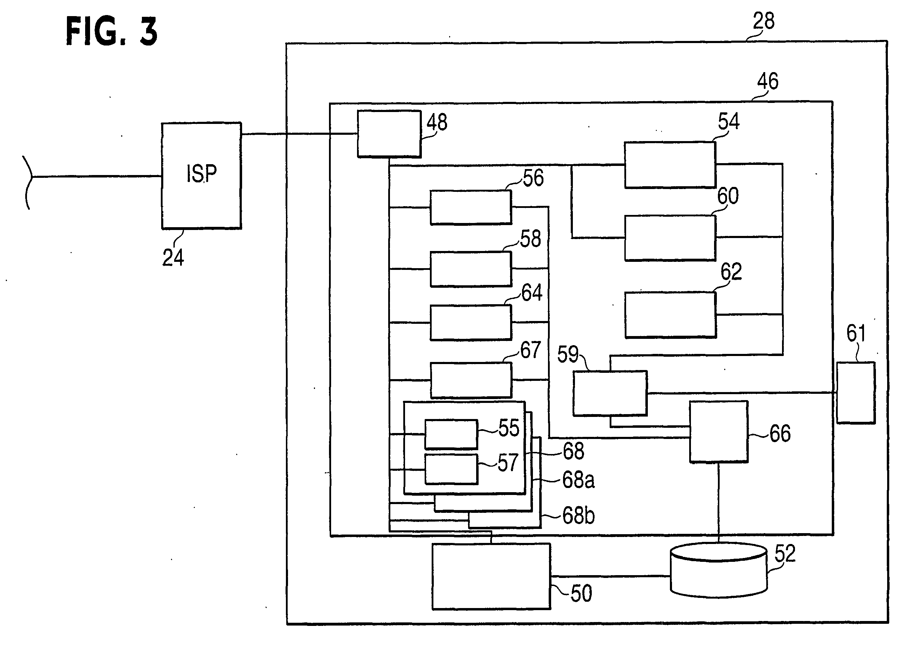

FIG. 3 is a more detailed block diagram representation of the server of the system of the network shown in FIG.1. In FIG. 3, the server 28 includes a support server 46, a response handler or application server 48, a network application server 50, and a directory server 52. As would be appreciated by one of ordinary skill in the art the referenced connections do not depict the physical connections between the elements but merely logical connections. The support server 46 provides services oriented towards enabling and supporting the services provided to the terminal 20. The support server 46 includes an upgrade service unit 54, a bookmark service database unit 55, a login services unit 56, a bookmark database 57, a profile services unit 58, a client log unit 59 for collecting information about clients, an advertisement services unit 60, a system log unit 61 for collecting information about events in the server 28 from the client log unit 59, an administrative services unit 62, a defined services unit 64, and a directory client unit 66.

Still referring to FIG. 3, the upgrade services unit 54 is dedicated to controlled software upgrade of the software for the support server 46. Updates are transmitted from the global upgrade server 38 (in Fig. 1) to the upgrade service unit 54. The login services unit 56 provides for authentication of the user and the terminal 20 that is being used to access the services based on information provided by the client unit 66. Additionally, the login services unit 56 is also responsible for log-off activities, such as individual session termination. The profile services unit 58 provides for modifying a user's profile information. This modification of a user's profile may include modifying the group and individual information and preferences. The administration services unit 62 provides for administration of the support server 46 and the application server 48. The software product updates are transmitted from the global upgrade server 38 (in Fig.1) and its configuration tool manager to the upgrade service unit 54 in Fig. 3 and its configuration tool client. The configuration tool client is the function unit, that acts when any configuration tool manager 38 (in Fig. 1) of management server 37 (in Fig.1) upgrades any software component, full executable software program or re-configures configuration parameters; application and system parameters.

In Fig. 1 a firewall 40 is protecting the connection to and from the global unit 34. It will be apparent to those skilled in the art that the firewall unit 40 functions to provide secured access to the global address server 36 and the global upgrade server 38.

In Fig. 3 The advertisement services unit 60 provides for the server 28 to tailor advertisements to the user and the terminal 20 according to the user's profile information. The defined services unit 64 is a classification of "other services" containing items such as bookmark management services, help services, and log services, name management services, and general management services. The directory client unit 66 is coupled to the directory server 52 to provide client verification.

In Figure 3. the remote register management and control unit 67 that knows the closest or the global terminal validation register address and control unit 67 may also interpret the answer received from said register. Typically, in terminal in the browser login action, the server 28 manages the client specific parameters 68 individually. That management information of one terminal browser session is stored and used after a request is received from an identified terminal 20. Other requests received from terminals (20-20c) processing different identification information (IDs) will use browser client specific parameters (68a, 68b) and may result in, for instance, seeking of bookmarks for the terminal when action request originated from terminal.

In Fig 1. the terminal may have access through proper authentication and service purchases of a third party publications are available from a vendor 33, such as news related information found in magazine publications or the daily newspaper.

The user interface of the terminal 20 (of Fig. 1) offers for the user alternative selections means to select command and a target to the command in main menu of the terminal view (the same that is presented when the terminal is powered on) or in an application e.g. calendar that is used at a time. In the terminal there may exist a hard button, which user may press at any time using any service of the system, the hard button selection will then result the next view to be changed to the main family view (or main individual view if the PC is used with having connection to access point).

Depending on the used service application, the user given selection and command from the terminal interface, the given command may affect the application content information of the service used by the group members. The authenticated group member may change e.g. the group calendar content according to given command in such a way, that other authorized members of the same group get the latest group calendar information from the server 28.

Thus, by utilizing this MDA system, it is possible to obtain information on a wireless device through a server and the Internet. Because the content is being handled by different systems having different protocols, it is necessary to convert the content from one system to another as the data is being passed back and forth. Thus, each page being viewed is defined as an XML page template, which is parsed with general MDA components. The information is then passed by way of a localization menu, which generates the view into the users defined language. Next, in the localization script, parsing results finally in a HTML page ready for the terminal.

Thus, the three previous stages are used to correct the fourth stage final conversion, which feeds in the actual content of the application questioned like e-mail or calendar content. The result is an HTML page, which is presented in the terminal.

When the user operates the wireless device to obtain information through the Internet, it is often necessary or possible to use a menu arrangement in order to select various possibilities on the screen. Such selection is done easily on a non-portable device such as a PC, where a mouse or other device may be utilized to control a cursor on the screen. Using a Microsoft Windows arrangement, it is noted that a selected icon, for example for Microsoft Word can be highlighted and as a result a drop down menu can be made available so that different options may be selected The menu is made available by placing the cursor on the Microsoft Word icon and right clicking on the mouse. However, in a portable wireless device, the need for additional space and weight makes the use of a mouse impractical. Likewise, because of the limited number of buttons on the device, the use of keys to control the cursor is also difficult. Accordingly, it is desirable to have systems, which are friendly to the user and simple to operate on a wireless device when selecting options from a menu.

The present invention is defined by the claims.

At least one embodiment provides a wireless system for allowing a wireless device to access the Internet through a server and to select options from a menu which appear on its screen where the object of interest is indicated by a focus marker, where the selection may be made with more than one device, where the menu is indicated by an icon which is always visible and when the selection is transferred to a server, localization and component parsing is done for data and audio visual user interface elements before responding back to the terminal in such a way, that the server side methods support more than one terminal type.

At least one embodiment provides a wireless system for allowing a wireless device to access the Internet through a server and select options from a menu where any visible service to a user of a group or as an individual user, where selection may be made with more than one device, that applies direct or indirect pointing method and shown with one of several alternative marked selection means, where the menu is indicated by an icon which is always visible and when the selection is transferred by using browser application as bearer application between the terminal and the server user not noticing the browser is used at the time and the server, localization and component parsing is done for data and audio visual user interface elements before responding back to the terminal in such a way, that the server side methods support more than one terminal type and or the user interface elements are created either in the server or in the terminal.

At least one embodiment provides a wireless system for allowing a wireless device to access the Internet through a server and select options from a menu where any visible service to a user of a group or as an individual user, which can be added or configured from the network to the server, the service to which a selection may be made with more than one device, that applies direct or indirect pointing method and shown with one of several alternative marked selection means, where the menu is indicated by an icon which is always visible and when the selection is transferred by using browser application as bearer application between the terminal and the server user not noticing the browser is used at the time and the server, localization and component parsing is done for data and audio visual user interface elements before responding back to the terminal in such a way, that the server side methods support more than one terminal type and or the user interface elements are created either in the server or in the terminal.

This can be applied to user interface selection, object menu, user given command interpret and showing the result in the terminal, that is a wireless or fixed connected to the network access point, the terminal including alternatively one of several size of displays.

It can be applied to user interface selection, object menu, user given command interpret and showing the result in the terminal display of a terminal, that is a wireless or fixed terminal connected to the network access point, the terminal type determining the available and supported selection devices and availability in the user interface view.

It can be applied to user interface selection, abject menu, user given command interpret and showing the result in the terminal display of a terminal, that is a wireless or fixed terminal connected to the network access point, the user interface view being divided into three areas; service selection tabs, content and advertisement areas when generic web browsing is not the activated application service.

It can be applied to user interface selection, object menu, user given command interpret and showing the result in the terminal display of a terminal, that is a wireless or fixed terminal connected to the network access point, the content area of the user interface view of the terminal is applied for visualizing, interacting and event functionality of the used service independently of the type of the terminal in such a way, that object selection means are the only terminal type dependent part of the usability of the service.

It can be applied to user interface selection, the user given command interpret and showing the result in the terminal display of a terminal, that the used terminal is a wireless terminal of the system and by selecting a hard button the user interface view is changed to main family level view.

It can be applied to user interface selection, the user given command interpret and showing the result in the terminal display of a terminal, that the used terminal is a wireless terminal of the system and by selecting a hard button, which is configured as back command of browser and the terminal application as web browsing the user interface view is changed to previous view,

It can be applied to user interface selection, toolbar and or virtual keypad given user command is interpreted and showing the result in the terminal display of a terminal, that the used terminal is a wireless terminal of the system in such a way, that users earlier activated view can be activated not losing the present used service view in such a way, that one of the two views of different applications can be selected to be the next shown content in the view.

It can be applied to user interface selection, object menu, user command is interpreted and showing the result in the terminal display of a terminal, that the available system services, that are selectable from service tabs may be configured and to be downloaded to the terminal from the server, the authorized server, that is connected to the network may download the required software and data configuration to the server to be used in the main view and the service view as one enabled user or group shared service.

It can be applied to user interface selection, object menu, user command is interpreted and showing the result in the terminal display of a terminal, that the available system services when selected the object menu content includes the commands for the selected service.

It can be applied to user interface selection, object menu, user command is interpreted and showing the result in the terminal display of a terminal, that the available system services when selected the object menu content includes the commands for the selected service and help as guidance to use the service.

It can be applied to user interface selection, object menu, user command is interpreted and showing the result in the terminal display of a terminal, that the available system services when selected the new event objects may be created by the user in such a way, that it is then usable with other users of the group when the event is ready and saved to the server and when later selected by a user object menu is visualized including the actions enabled to the created object.

Described is a system where the wireless device is connected to the Internet through a server. The screen on the wireless device includes a focus marker in the form of a dark border, which indicates various portions of the screen to specify which objects are being selected. In addition, the objects on the screen have an indicator, which lets the user know that a menu may be brought up by its actuation. A selection of options within a menu can occur by using a variety of input devices.

A more complete appreciation of the invention and many of the attendant advantages thereof will be readily obtained as the same becomes better understood by reference to the following detailed description when considered in connection with the accompanying drawings, wherein:
Figure 1 is a block diagram of a wireless communication system;
Figure 2 shows a terminal of a system; and
Figure 3 shows a server of a system; and
Figure 4 is an enlarged view of a menu according to the present invention;
Figure 5 is a view of a screen according to the present invention including a focus marker,
Figure 6 is a view of another screen according to the present invention;
Figures 7, 8, 9, 10 and 11 are schematic diagrams showing the handling of commands between the wireless and the server.

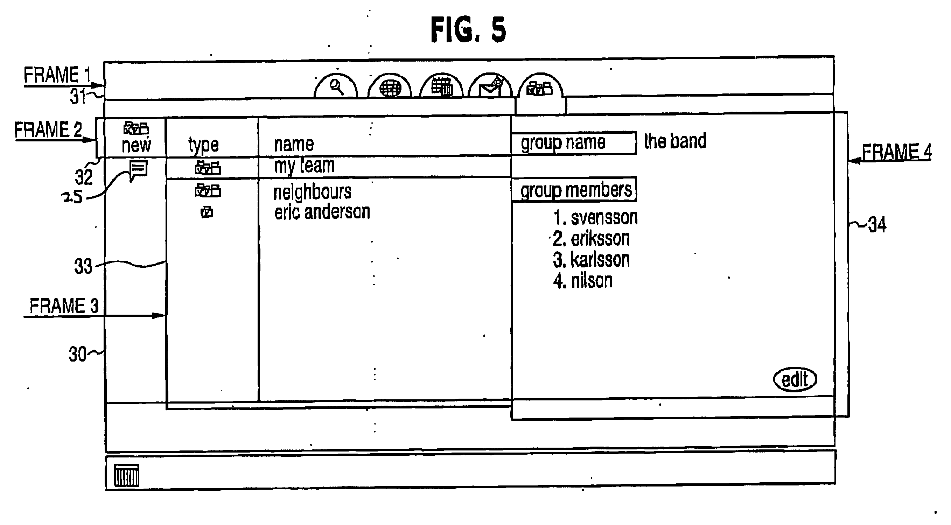

Referring now to the drawings, wherein like reference numerals designate identical or corresponding parts throughout the several views, and more particularly, to Figure 5, the view seen in the screen of the wireless device when connected to a data base of names and addresses. In this program, five tabs are shown at the top of the screen to select five different functions, each of which is indicated by a separate icon. Thus, the bulletin board is indicated by a thumbtack, bookmarks for the Internet are indicated by the globe, the family calendar is indicated by a calendar figure, e-mail is indicated by an envelope and a data base of names and address is indicated by a group of people. An object menu may be invoked by selection control button 25 is present in the upper left hand corner.

The control button 25 may be also defined to invoke other user interface features such as a new dialog.

Under previous systems, such object menus can be observed by right clicking on a mouse connected to a PC. However user studies has shown, that the non-visual object menu is not used much. Users are not aware of possibility to use an object menu, which they are not trained to beused and or which is not for offer in view of the display of a terminal. An enhanced feature is to have the object menu indication such as icon available at all times somewhere on the screen, but essentially close to the selected object after user selection is made. The object menu presentation may be also another kind than only an icon. Thus, visualizing an object menu eliminates the need to right click given by the user in order to even have the object menu to appear on the display, By having e.g. the icon 25 available, it is only necessary to select this button in order for the menu to appear. The selection of the button may be accomplished by several different methods. If the device is provided with a mouse or keyboard, it can be selected by a left click on the mouse or the appropriate use of arrow keys and the enter key on the keyboard. However, since this is not typically available on a wireless device, it is possible to use a touch screen arrangement as is described in several of the related cases described above. The user has to only touch the icon with his finger or a pencil in order to actuate this icon. It is also possible to use a virtual keypad on the touch sensitive screen in order to direct the selection of this icon in a fashion similar to a physical keyboard. It may also be possible to use an integrated roller on the terminal and roller control buttons if they are available. When the user selects the menu icon, it is also necessary to indicate which object this is being applied to.

The marker or selection means, that user can use is one of the means in the following list, external mouse that is connected to the terminal, external keypad that is connected to the terminal, visual and virtual keypad that is displayed to the touch sensitive screen, direct manipulation selection arrangement made with fingertips or e.g. a pen to touch sensitive screen user interface selections, the integrated roller(s) in the terminal and roller control buttons.

When the external mouse is used for marking the target into which user's commands are to be directed, marking the target of the command is done typically by pressing one button once (the left most button of the mouse). Then application specific command is typically selected from a menu (like Edit menu) and then selected command affects the previously marked target of the command. When the user uses mouse (or joystick, trackick pad, trade ball) as the selection device the selection or marking is made indirectly to the object.

Alternatively when an external keypad is used, the marking or selection concerning target of the selected command may be done by moving the active selection point to up, down, left or right with the "arrow buttons". The actual selection or marking is then done by pressing <enter> button. Also alternative to moving the active marking with "arrow buttons" (->,<-,..) the marking point can be moved for instance by pressing "tab" button and The user interface of the application may move the active marking position from one target to another in such a way, that all the possible targets in one view, one at a time is available to be selectable. Then the command that is to be processed for the selected target is typically given by pressing some button control like for instance <ctrl> button and in the same time a character button (like "W") or two concatenating character button pressings (like "W" and "O", the first character defining the menu set and the second the command in that menu set or the first character defining the command and the second target where to the response is directed e.g. save to memory). When the user uses e.g. arrow also known as direction keys as the selection device the selection or marking is made indirectly to the object.

Alternatively when a virtual keypad is used for the marking or selection marking the target and giving a command may be done similarly as above described concerning the usage ofan external keypad. Instead of using "arrow buttons" or "tabs" to select or mark the target and character or function buttons to give certain commands to selected target, the user may do the keypad button selection with his fingertips directly to display "the soft kcys". The soft keys are the keypad buttons drawn on the touch sensitive display to look like hard button keys of the keypad. When the user uses virtual keypad as the selection device the selection or marking is made indirectly to the object.

When direct manipulation selection is used, the application that is used can be controlled from user interface, the user first selects the target by directly touching the target area in the touch sensitive display. In the next step a menu of commands or a command button is selected (from the view if presented at the moment) and in the third step is when the given command is processed for the selected object. As a result possibly a status indication of the processed command is shown in the display of the user interface. The terminal 20 (in Fig. 1) user issues commands to the terminal 20 and the server 28 by using direct manipulation and from menu-type of UI controls (object menu, toolbar etc.). He either press the hardware or software button down, keeps his finger on hardware or software button for a longer period, moves his finger over the touch-sensitive touch screen and lifts his finger from the hardware or software buttons. All of these basic user interactions - or basic user events - need to be detected by the hardware and software. Hardware and software buttons are therefore at certain software level considered identical From user interaction point of view they are to be considered even.

Thus, in Figure 5, the first group is highlighted in order to indicate that this is the group of interest to which the menu is being applied. Thus, in this arrangement it is necessary to first indicate the object and then indicate the menu button. It would be possible also to instead include the menu icon on each of the groups so that it would then be necessary to only indicate by a single selection the particular menu icon that is present on the selected object. If, for example, each of the groups included the same menu icon in the left column the menu for the first group may be selected by touching that particular icon so that the menu comes up relating to that particular group. While this arrangement puts extra images on the screen, it makes the selection process easier. It would also be possible to display the entire menu for each object all the time to make selections even easier. However, this would even further clutter the screen.

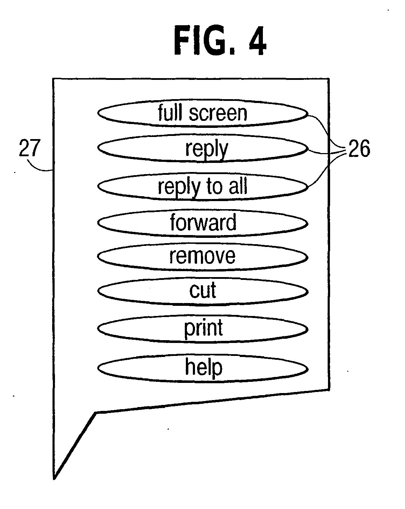

Figure 4 shows a menu 27, which has been displayed after selection. The menu includes a series of options 26, each of which is indicated by a separate button displayed thereon. This menu is similar to the menu described above in regard to the Microsoft Windows Arrangement. That is, individual options can be selected from the menu. The particular options in the menu may be selected in the same manner that the menu icon has been selected as described above. That is, these can be selected using a left click of a mouse, a physical keyboard, a virtual keyboard, and a roller ball or by the touch of a finger or pencil. For Example once a particular option is selected, the device operates in the fashion similar to that commonly known.

As indicated above, the use of this menu icon makes the selection process easier. By having the object menu icon always available, rather than having the user to do an input by using the selection or marking device to bring it up, one step in the process is eliminated. Also, by having the icon available on each of the objects, another user interface step is eliminated. This is particularly important in wireless devices since the screen size is quite small and the selection is not as easy as in a full size PC utilizing a mouse.

As indicated above, at least five different methods area available for making selections either directly or indirectly relative to the object on the screen. While different selection and marking devices may have different possible choices for actuation, one important feature is the ability to use more than one type of selection device in a single wireless device. Thus, if a touch screen is available, the user has the option of touching the icon or to use a virtual keyboard to move the icon around. While the touching action is the simplest and most direct, there may be some concern regarding smudging the screen, especially if it is necessary to do a number of selections over the course of the day before it is possible to clean the screen. Also, because the screen is somewhat small it may be easier to control the selection process using the virtual keyboard rather than using a finger and having a series of errors one to the wrong icon being actuated or more than one icon being actuated. This, of course, depends on the dexterity of the person involved, the size of their fingers, etc.

Another reason that a user may not wish to use the touch screen arrangement is that if the user has long fingernails, the fingernail may touch the screen before the finger tip in a slightly different location so that an erroneous is made. This provides the user with options as to which he prefers to use. Not only may different users use different options, but also the same user may choose a different option under a different circumstance.

In addition to having the object menu icon available at all times aud having a plurality of menu icons each associated with its specific object, as described above, it is also possible to have more than one object menu for a single object when the object of lowest hierarchy level of event objects of a service or application belong as a subset to another object of a higher hierarchy level of objects in order to separate two different types of features related to the objects of different hierarchy level. Thus, it is possible that two menu icons could be placed on the screen where one menu contains service specific object menu options of e.g. on one view area and the other menu has item specific object menu options in another view area. For example received e-mails may be the object into, which the first object menu icon relates and specific received email is the second object to which the other object menu is related. Likewise, it is possible for each obj ect to have two icons with the same separation of features. This will limit the number of options, which the user must select from when the menu appears. The user has easier to give acceptable input command for an object since the set of commands, which maybe given to an object when one service is used, is dependent of the hierarchy level of the object. This could be extended even further so that each option in the menu has its own menu button, which would eliminate an additional step. However, this would generally be unacceptable since too many menu buttons would be present on the screen.

Another manner in which the selection of options on a screen may be simplified is the use of a focus marker used as a selection marker around a portion of the screen. A focus marker is merely a borderline, which surrounds a portion of the screen in order to limit the selection process to that area. For example, Figure 5 shows the screen available under the same system described above, with the fifth or right hand tab indicated by several people being actuated. This screen shows address book type information for various people and also allows different groups to be described. Thus, the full screen is indicated by number 30. This screen includes a first screen area 31 with the five tab selection buttons. Screen area two, 32, includes a small section below the first screen area which includes columns referring to type (i.e. person or group) and name. Screen area three, 33, is below screen area two and includes a list under the headings shown in screen area two. Screen area four indicated by 34 is on the right hand side of screen area two and three and below screen area one. It includes specific information related to the selected listing in screen area three. Thus, in this screen, the first item in the list of screen area 3 indicates that "my team" is selected and that this is a group. Screen area four indicates the group name and the group members associated with that group.

When the user wishes to make selections using a hardware scroll button or other selection devices such as screen touches, mouse movement, keyboard actuation or focus area marking, it is helpful to limit the screen to a particular screen area which is being selected. This is especially true when using scroll buttons. For example, in Figure 5 it would not be clear whether one is trying to scroll down the list in screen area 3 or the list of members in screen area 4. By moving the focus marker onto different screet area it is possible to limit the possible actuation of different items. Thus, the scroll button will only work with screen area three if it is indicated by the focus marker. Even if other systems such as a touch screen is utilized, this may be helpful since it will eliminate the possibility of erroneous touches in wrong screen areas.

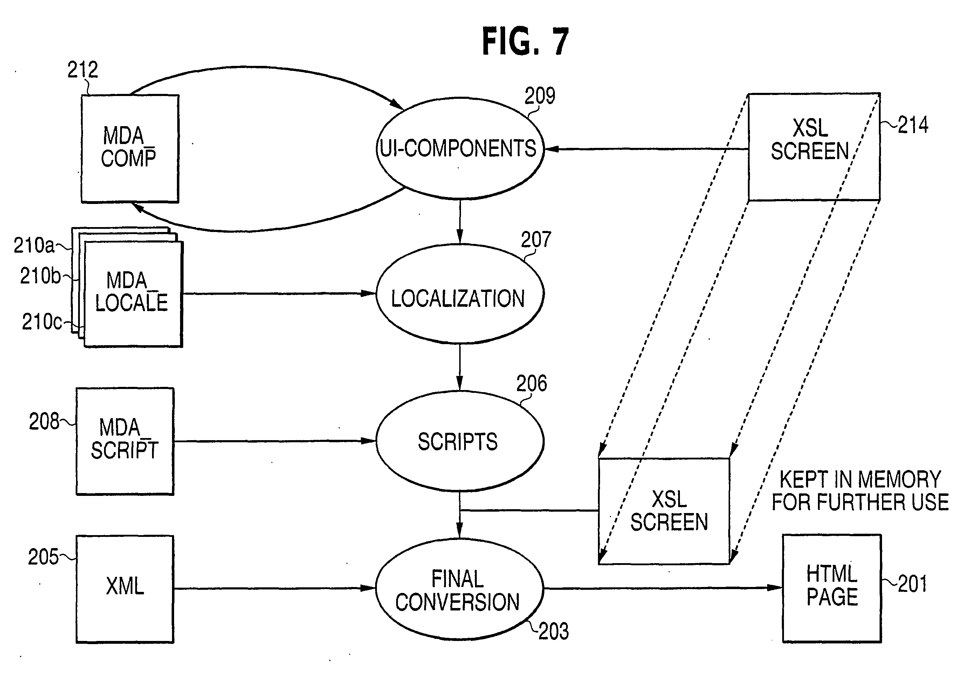

The operation of this focus marker can be compared to using a tab key on a PC to go between different objects within an application. Thus, the focus button can be moved between screen areas by actuation of a single button or other actuating device so that it moves in sequence between different screen areas. One screen area will normally be set as a default position, such as screen area three. The screen areas may be selected in order using the equivalent of a tab key. The different screen areas may also be selected by another actuating device such as a finger touch, the arrow keys, etc. It should be remembered that the main purpose of the focus marker is to support hardware button inputs on the mobile terminal, Thus, this feature will not occur during browser operations. It should also be noted that certain parts of the screen would not be accessed by any marking or selection device. For example in Figure 7, there is a gray area at the bottom of the screen, which is used for advertising and which is not included in any selectable screen area.

The user interface, that is shown in the terminal display, that is a wireless or fixed terminal connected to the network access point, the user interface view is possible to be divided into three areas; service selection tabs, content and advertisement areas when genetic web browsing is not the activated application service. The service selection tab area in Fig. 7 is the first screen area, where from specific service application can be initiated to be used. A content area is the screen area indicated as 30 in Fig. 7.The area below it may be used for instance advertising.

Specific marker means such as focus marker may be defined in such a way, that it is used only in the limited area of the screen e.g. the content area.

The specific marker means such as focus marker may be defined in such a way, that it is used only in the view of the mobile terminal of the system.

When the user wishes to move the focus marker, the action depends on the type of inputting device. Thus, if a touch screen arrangement is used, the user can only move the focus marker to another object by physically moving the marker visibly over the new object. If a hardware button imput is utilized, the user can step the marker between objects in the active screen area by scrolling on the roller button. If the user interface objects are items in one of the lists within the mobile terminal surfaces, moving the focus marker also at the same time moves the highlight to the next object and using the scroll left/right, the user can move between screen areas in the surfaces. If the user interface objects are on a public web page the scroll left/right buttons can also be used to step the focus marker between objects.

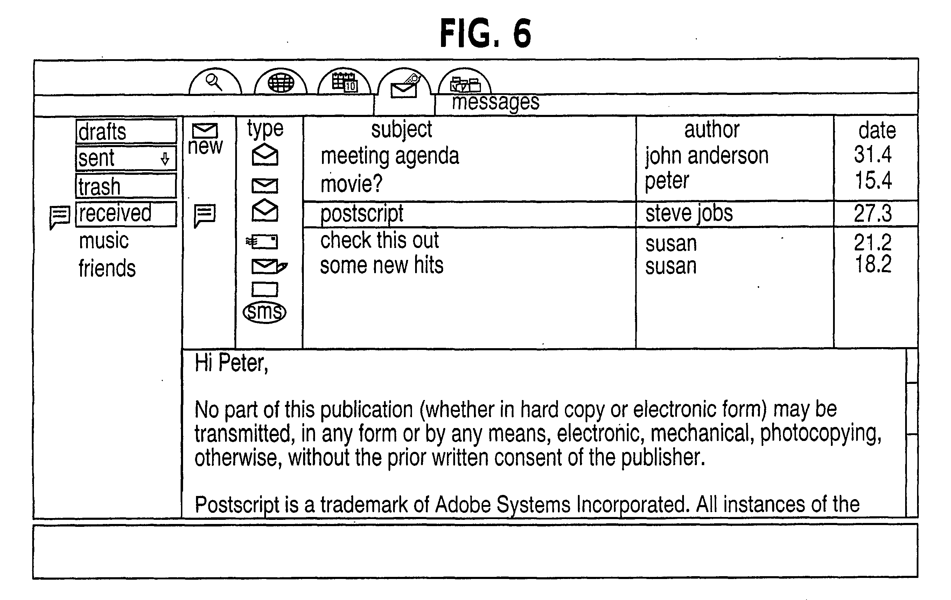

Figure 6 shows another screen of the wireless device where the fourth tub indicating e-mail has been selected. In this screen, the left hand column indicates various categories of listings, which may be selected. In this case, the fourth button labeled "received" has been highlighted so that the large area to the right lists the items received. Within this listing, the third item on the list has been selected as indicated by the highlighting so, that a preview of this message is displayed in the area below the list and having the text. Both the section listing on the left hand side and the selected item in the listing on the right have the object menu icon indicated nearby. This icon moves with the selected item so that the icon is always available but is only visible for the items, which have been selected. This moves along with the highlighting area as selection is being made.

It must always be remembered that when using a wireless device to access the Internet or other network, that different protocols come into play between the different parts of the system. Thus, with this layering of protocols various arrangements must be made to not lose content and to properly interact in a fashion as workable at all levels. For example, when an option it selected from an object menu it is necessary that the selection be forwarded from the wireless device to the server and thence through the Internet so that the connection is then made and the selection option is then displayed in the wireless device. The selected object may be portrayed with a selection marker such as the focus marker and an audio feedback maybe played in the terminal when the visual object menu indicator is selected for showing the command selection options for the related object.

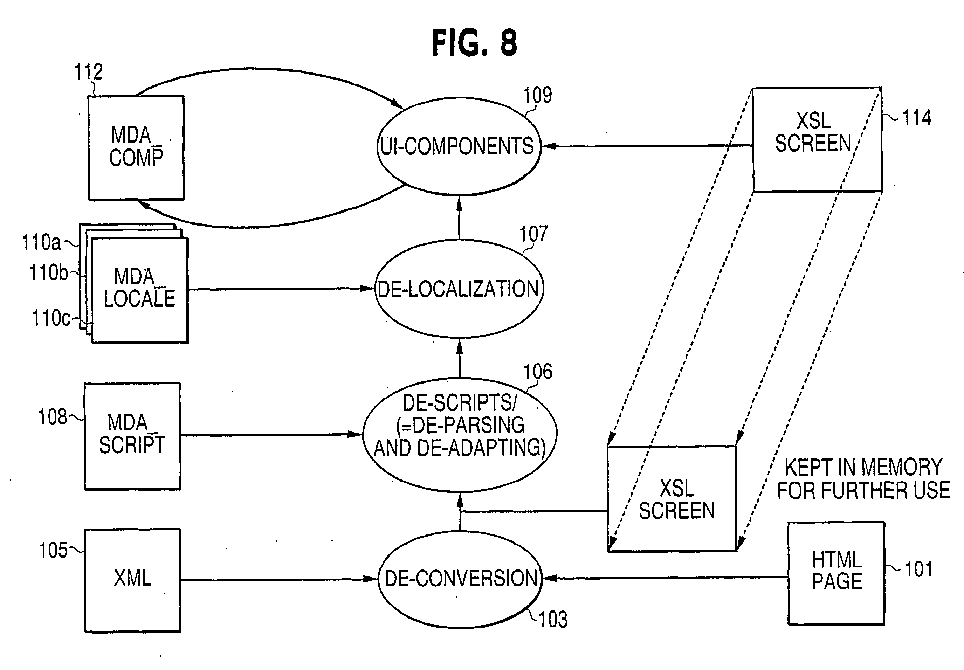

Figures 7, 8, 9, 10 and 11 display some of this interaction in regard to the support server page generation and the support server page selection response handling.

Every command, that it selectable from the screen and the object to which the command is directed are considered user selection information. The selected command can be interpreted as code and the object can be interpreted in a selection data format that may be similarly structured as the command code (like in HTML).

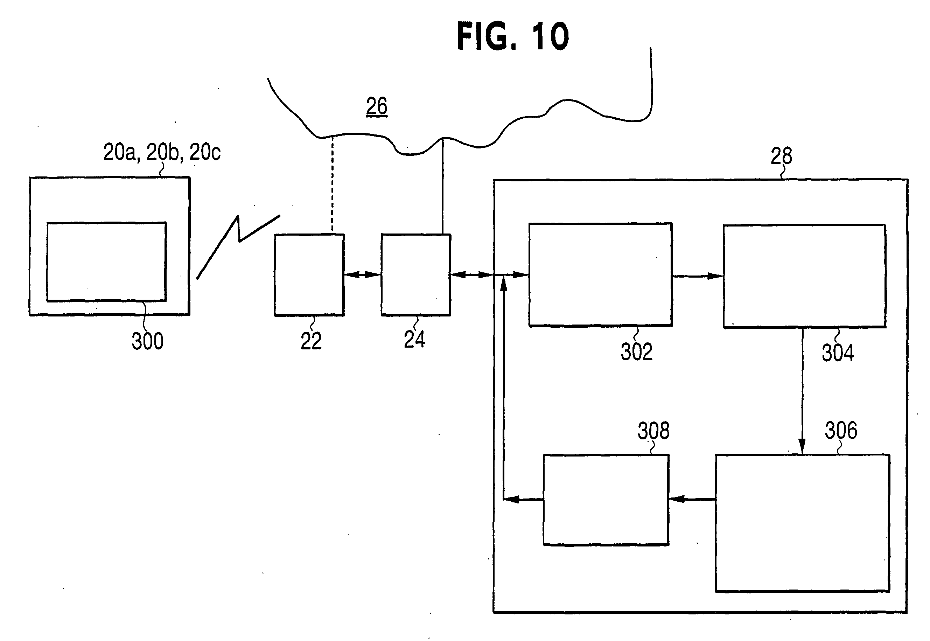

In Figure 10 is presented terminal 20a, 20b,20c and server 28 which are in connection via server of access provider 22 and server of Internet service provider 24.

The connection from the terminal to the server of network access provider 22 is the earlier described air interface connection e.g. WLAN. The connection from the server of the access provider 22 via the server of Internet service provider 24 to the server of the mobile terminal system 28 is made e.g. TCP/IP connection, which is commonly known as Internet connection. In the terminal there is a HTML control block 300, that is capable to receive HTML page information from the server and displaying it to the terminal's screen. The HTML control block does also send all user selection information from the terminal via servers of access provider and Internet service provider to the server of the system 28. That interface between terminal 20a, 20b, 20c and the server 28 is part of the API, Application Protocol Layer Interface.

At the server 28 side in the Fig. 10 there is a request handler control block 302 that receives the HTTP message from the server. Into the request handler is in connection a service control block 304, where to the request handler forwards the user information according to user used service. Depending on the service in question and the information relative to the session connection and the user given information the service block creates response either in XMI. data and name of the XSL template to be used, when the data is processed further in the next stage. The page generator 306 receives the response template to be used and the data, which are former processed in the page generator. The page generator tailors the page according to actively use user (which may also be multi user) profile and sends it to the HTML control block 308. The HTML control block is the control element in the server that sends the server's response to the terminal as feedback to the user given information. The control blocks of the server, which are presented in Figure 10, those control blocks are logical control blocks of server 28. In Figure 3 the control blocks of server are presented in such a way, that all the functional blocks of the server is presented in more detailed than in Fig. 10. In Figure 10 the request handler control block 302 is presented in Figure 3 in the block called response handler 48 also known as application server. In Figure 10 the service block 304 is presented in Figure 3 in the Figure 3 in set of blocks; login services unit 56, profile services unit 58, defined services unit 64. In figure 3 other control units such as network application server 50, directory services 52 client log unit 59 and the browser units 86, 68a 68b are supportive control blocks to the response handler and services units.

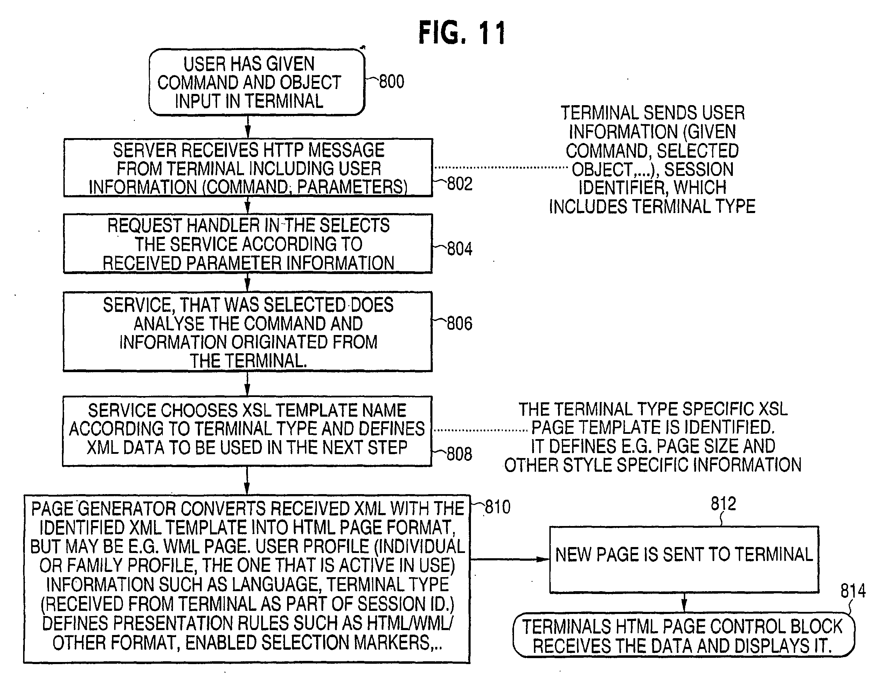

In Figure 11 after the user information is input in the terminal device the user interface element in the terminal traps the user information selection message in step 800, and sends it to the network from the HTML control block 300 by using at present known HTTP messages e.g. POST or GET. The HTTP protocol is described e.g. in "Hypertext Transfer Protocol - HTTP/1.1" publication that is today available in Internet address http://www.w3.org/Protocols/rfc2068/rfc2068. The HTTP control block of the terminal fills in the user selection information; given command, application service, the selected object and information of the connection session identification, which includes the terminal type. The HTTP message is received at server in the request handler unit 302 and the user information, then included as content to HTTP message POST or GET, which one is not relevant from this invention point of view. The received HTTP message content includes session identification, which includes the type of the terminal information and user selection information. The received HTTP message includes as user selection information; the command user selected, the selected object, and possibly other service application information. The request handler (302 in Fig. 10) makes the selection in step 804 (in Fig. 11) according the application service identification that is received in the HTTP message and selects the right service of the services block 304 where to the message content is further transferred. The service block functions according to user's information (the given command and selected object) in step 806 and as result of the selection it creates response data in XML format and identifies the XSL-teplate by defining e.g. name of the template. The identified XSL template may be for instance "login screen". Then in the next step 808 the received XSL template name is used further on in addition to terminal identification information. The XSL template is terminal type specific due to terminals different capability to interpret, store and display the received information. Size of the terminal display and the terminal's capability to support certain signaling protocol are those subject matters due to which different XSL templates are used with different type of terminals in step 808. For instance the first view after the terminal is powered on is so called "login screen", which is identified in the previous step 806, and for instance if the terminal of the mobile system used "login screen mda' is used in the next step 810. If common PC is the used terminal type then "login screen PC" is used in the step 810. If the used terminal is for instance Nokia's WAP mobile phone the used login screen, that will be in WML format (Wireless Markup Language format as specified by WAP forum at Internet address http://www.wapforum.org/), and is named for instance "login screen 7110" to be used in step 810. The page generator (306 in Figure 10) receives the service block selected response template, which is further processed in the page generator. The page generator in step 810 in Fig. 11 tailors the page according to actively used user profile (,which may also be multi user profile). For instance language selection of the actively used profile defines, that page generator translates all the text information into the defined language. The terminals marker and selection devices or mean, that it is capable to support are known according to the terminal type. Any other User interface specific means than marker and selection means may also be defined according to the terminal type. The page generation stage provides a method for generating display instructions by converting template containing style information into a final format, which converts e.g. data created in one language into a second language. The method for converting one machine-readable language for example XML or XSL into another e.g. HTML by applying instructions to style template is described in the referred patent application. At the server (28 in Fig. land 10) the HTML page is send from the HTML control block (308 in Fig. 10) to the terminal in step 812 in Fig. 11. In the terminal the HTML page information (or WML information if WAP terminal is used) is received and displayed on the terminal screen in step 814 in Fig. 11 by the HTML control block 300 (or alternatively by WML control block if WAF terminal is used). The steps described in Fig. 11 and explained above in the server side phases of the method may be at least partly been done in parallel order. The used air interface protocol is at present HTTP over the WLAN, but in the future basic idea of this invention embodiment can be applied in other bearer and protocol environment over the air. For instance possible alternatives are the GPRS, General Radio Packet Service specified by the BTSI or the third generation wireless terminal system specified by3GPP. The previous processing steps 800-814 of Figure 11 can then be done partly in the server side in the network and partly in the terminal in such a way, that on terminal side more steps of the method is made For simplicity, this will be explained as being processed on the mobile system server side. This is the preferable manner since it is best to have as much processing accomplished out of the wireless device in order to make it simpler and more portable.

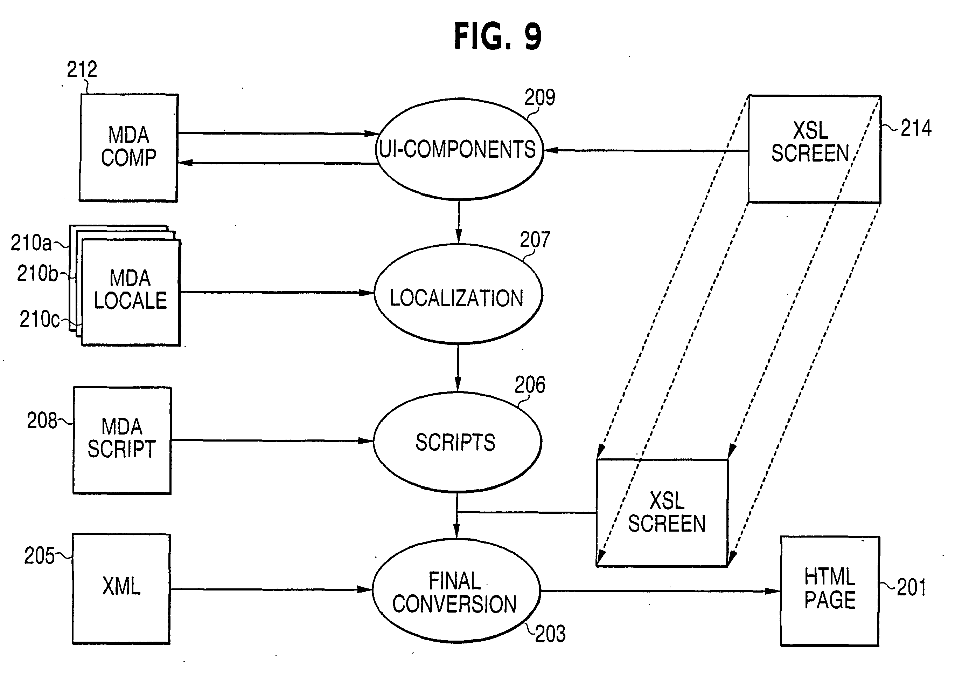

When a response from the system server 28 (of Fig. 1) or from the Internet via a cellular network is sent back to the terminal, the processing direction is converted into that shown in Figure 9.

Corresponding parts operate in similar fashion but in a reverse order. Thus, it can be seen that any user selection information being transferred to the server has localization and component parsing performed before a response to the user selection is sent back to the terminal.

Thus, each page is defined as an XML page template, which are parsed with general mobile system components like the service menus and object menus. After that the context ofview information is passed via localization menu, which generates the view into the user's defined language. This localization is user/family profile definitions. The next step is the localization script in which parsing produces an HTML page ready for the terminal to be transferred via WLAN. The localization and parsing can support terminals, that have more than one possible size of the display, but doing the necessary information processing in such a way, that the mobile terminal of a system is supported optimized way. That means, that depending on the memory means of the terminal possibly more information is sent to the terminal that is being able to be shown in the display view at a time. Other terminals such as fixed connected terminal to the network may receive e.g. less information than the mobile terminal of the system.

When the user access a service like a calendar service or retrieve information from the server 28 the browser 74 (in Fig. 2) is the program product that in charge to convey the service specific information and the main view of the selected application such as calendar service from the server 28 (of Fig. 1) to the terminal 20 (of Fig. 1 and 2). When user information selection is sent from the terminal to the server the transfer is made by applying the browser application of the terminal (the browser 74 in Fig. 2) and the server system (blocks 68, 68a or 68 b in Fig. 3). The in the server side the received HTML format user information is initially received in the browser block 68 of Fig. 3 and part of the browser methods in server side uses the terminal client specific section 68a or 68b of the browser.

The software product updates are transmitted from the global upgrade server 38 (in Fig. 1) and its configuration tool manager to the upgrade service unit 54 in Fig. 3 and its configuration tool client. The configuration tool client is the function unit, that acts when any configuration tool manager 38 (in Fig. 1) of management server 37 (in Fig.1) upgrades any software component, full executable software program or re-configures configuration parameters; application and system parameters and user interface style information such as terminal style templates.

When operating the wireless device, different activating mechanisms can be utilized, as described above. Thus, this may include an external mouse connected to the terminal, an external keyboard connected to the terminal, an virtual keypad that is displayed on the touch sensitive screen, a direct manipulation arrangement or an integrated roller in the terminal with roller control buttons. The operation of these different devices is herewith described.

When the external mouse is used for marking the object into which the user commands are to be directed, marking is done typically by pressing one button one time (left click). Application specific commands are typically selected from the menu, which affects the previously marked object. This is the basic mouse selection pattern currently used in most PC's.

When an external keypad is used, the marker may be activated by moving the active selection point up, down, left or right with the "arrow buttons" and the actual selection is done by the enter button. The alternative to using the arrow buttons is the use of the tab button in order to move the marking position from one object to another one at a time until the preferred object is selected. The command that is to be processed is given by pressing some button control such as the control button and at the same time a character button or by using two character buttons together. This kind of marking and selection is also generally known in standard PC's. If a virtual keypad is used, the marking and selection of the object may be done similarly as described with the external keypad situation, but instead of using arrow buttons or tabs, the user uses fingertips directly on displayed soft keys which are keypad buttons drawn on the touch sensitive display to look like hard button keys.

When direct manipulation is used, the selection is accomplished by directly touching the object area in the touch sensitive display. A status indication of the process command can be shown in the display of the user interface. The selected object is typically shown in different color by highlighting or shading.

Numerous additional modifications and variations of the present invention are possible in light of the above teachings. It is therefore been understood that, within the scope of the appended claims, the invention may be practiced otherwise than as specifically described herein.

## Claims

1. A wireless terminal device (20) comprising:
a screen (70) on which objects including icons appear; and
at least two selector devices for selecting objects from said screen (70);
**characterised:**
**in that** the at least two selector devices are independent; and
by focus marker means for placing a focus marker around a field on said screen (31, 32, 33, 34), the focus marker being movable between screen areas (21, 32, 33, 34) using a first one of said independent selector devices, wherein the second selector device operates on objects only within the screen area indicated by the focus marker.

2. The device according to claim 1, wherein said two selectors include a touch screen and virtual keys.

3. The device according to claim 1 or claim 2, wherein said screen visibly displays an object menu icon at all times.

4. A device according to claim 3, wherein said object menu icon includes a plurality of object menu icons, each associated with a separate object on said screen.

5. A device according to any preceding claim, further comprising a wireless connection to an access point of the network.

6. A device according to any preceding claim, wherein the size of the terminal display varies according to terminal type.

7. A communication system, comprising:
at least one wireless terminal (20) as claimed in claim 1;
an access point (42) in wireless communication with said terminal (20) and forming part of a network;
a server (28) connected to said network.

8. The communication system according to claim 7, further comprising a connection from one of the access point (42) and server (28) to the Internet (26).

9. The communication system according to claim 7 or claim 8, wherein in response to the selection information being transferred from the terminal (20) to the server (28), the server (28) responds back to the terminal (20), with suitable page template into which localization and component parsing being accomplished before a response to the selection information is sent to the terminal (20).

10. The communication system according to any of claims 7 to 9, wherein an object menu icon is provided on a screen of said wireless terminal with associated object.

11. The communication system according to claim 10, wherein object menu icons associated with a plurality of objects are visible at the same time.

12. The communication system according to any of claims 7 to 11, wherein the object menu icon causes an audio feedback to be played in the terminal when the icon is selected to open.

13. The communication system according to any of claims 7 to 12, wherein the selection information is transferred from the terminal (20) to the server (28) by applying a browser application between a terminal (20) and server (28) connection.

14. The communication system according to any of claims 7 to 13, where in the selection information may be processed into HTML format in the terminal (20) before it is sent to the server (28).

15. The communication system according to any of claims 7 to 14, further comprising: a service that is selectable from a service tab which may be downloaded from a management server.

16. A method of selecting items on a screen of a wireless terminal device (20), wherein objects including icons appear on the screen, the method comprising:
providing at least two selector devices for selecting objects from said screen;
**characterised:**
**in that** the at least two selector devices are independent;
by placing a focus marker around a field on a screen (31, 32, 33, 34), the focus marker being movable between screen areas (31, 32, 33, 34) using a first one of said independent selector devices; and
by limiting the second selector device to operate on objects only within the screen area indicated by the focus market.

17. The method according to claim 16, further comprising:
displaying an object menu icon associated with said screen visibly at all times of said display.

18. The method according to claim 17, wherein said object menu icon includes a plurality of icons, each associated with different objects on said screen.

19. The method according to any of claims 16 to 18, wherein said selectors include a touch screen and virtual keys.

20. The method according to any of claims 16 to 19, further comprising:
transferring user selection information to a server (28);
said server (28) responding back to said terminal (20);
localizing and parsing said selection response information before responding back to said terminal (20).

21. The method according to any of claim 16 to 20, wherein the terminal (20) is wirelessly connected to a network.

22. The method according to any of claims 16 to 21, further comprising.
selecting an information template and localizing and parsing the selection response information, so as to support multiple size display of the terminal, before the response is sent back to said terminal (20).

23. The method according to any of claims 16 to 22, further comprising:
selecting an information template and localizing and parsing the selection response information in such a way, that a focus marker is supported for the terminal and added to view before responding back to said terminal.

24. The method according to any of claims 16 to 23, further comprising:
a user interface style template for use when the screen of a service is made, which is downloaded from a management server.

## Patentansprüche

1. Drahtloses Endgerät (20), umfassend:
- einen Bildschirm (70), auf dem Objekte einschließlich Icons erscheinen; und
- mindestens zwei Auswahlvorrichtungen zum Auswählen von Objekten von dem Bildschirm (70);
**gekennzeichnet**
- **dadurch, dass** die mindestens zwei Auswahlvorrichtungen unabhängig sind; und
- durch Fokus-Markierungs-Mittel zum Platzieren einer Fokus-Markierung um ein Feld auf dem Bildschirm (31, 32, 33, 34) herum, wobei die Fokus-Markierung zwischen Bildschirmbereichen (21, 32, 33, 34) unter Verwendung einer ersten der unabhängigen Auswahlvorrichtungen bewegbar ist, wobei die zweite Auswahlvorrichtung nur auf Objekten in dem durch die Fokus-Markierung angegebenen Bildschirmbereich arbeitet.

2. Gerät nach Anspruch 1, wobei die zwei Auswähler einen Touchscreen und virtuelle Tasten einschließen.

3. Gerät nach Anspruch 1 oder 2, wobei der Bildschirm jederzeit ein Objektmenü-Icon sichtbar anzeigt.

4. Gerät nach Anspruch 3, wobei das Objektmenü-Icon eine Vielzahl von Objektmenü-Icons einschießt, von denen jedes mit einem separaten Objekt auf dem Bildschirm verknüpft ist.

5. Gerät nach irgendeinem der vorherigen Ansprüche, weiter eine drahtlose Verbindung mit einem Zugangspunkt des Netzwerks umfassend.

6. Gerät nach irgendeinem der vorherigen Ansprüche, wobei die Größe der Anzeige des Endgeräts entsprechend dem Typ des Endgeräts variiert.

7. Kommunikationssystem, umfassend:
- mindestens ein drahtloses Endgerät (20) nach Anspruch 1;
- einen Zugangspunkt (42), der sich in drahtloser Kommunikation mit dem Endgerät (20) befindet und einen Teil eines Netzwerks bildet; und
- einen Server (28), der mit dem Netzwerk verbunden ist.

8. Kommunikationssystem nach Anspruch 7, weiter eine Verbindung von dem Zugangspunkt (42) oder dem Server (28) mit dem Internet (26) umfassend.

9. Kommunikationssystem nach Anspruch 7 oder 8, wobei in Reaktion darauf, dass die Auswahlinformation von dem Endgerät (20) an den Server (28) übertragen wird, der Server (28) dem Endgerät (20) mit einer geeigneten Seitenvorlage rückantwortet, in der Lokalisierung und Komponenten-Analyse ausgeführt werden, bevor eine Antwort auf die Auswahlinformation an das Endgerät (20) gesendet wird.

10. Kommunikationssystem nach irgendeinem der Ansprüche 7 bis 9, wobei ein Objektmenü-Icon auf einem Bildschirm des drahtlosen Endgeräts mit einem verknüpften Objekt bereitgestellt wird.

11. Kommunikationssystem nach Anspruch 10, wobei Objektmenü-Icons, die mit mehreren Objekten verknüpft sind, zur gleichen Zeit sichtbar sind.

12. Kommunikationssystem nach irgendeinem der Ansprüche 7 bis 11, wobei das Objektmenü-Icon bewirkt, dass eine Audio-Rückmeldung in dem Endgerät abgespielt wird, wenn das Icon zum Öffnen ausgewählt wird.

13. Kommunikationssystem nach irgendeinem der Ansprüche 7 bis 12, wobei die Auswahlinformation von dem Endgerät (20) an den Server (28) übertragen wird, durch Anwenden einer Browser-Anwendung auf eine Verbindung zwischen Endgerät (20) und Server (28).

14. Kommunikationssystem nach irgendeinem der Ansprüche 7 bis 13, wobei die Auswahlinformation in dem Endgerät (20) in HTML Format verarbeitet werden kann, bevor sie an den Server (28) gesendet wird.

15. Kommunikationssystem nach irgendeinem der Ansprüche 7 bis 14, weiter umfassend:
- einen Dienst, der aus einem Dienst-Feld auswählbar ist, das von einem Management-Server heruntergeladen werden kann.

16. Verfahren zum Auswählen von Elementen auf einem Bildschirm eines drahtlosen Endgeräts (20), wobei Objekte einschließlich Icons auf dem Bildschirm erscheinen, wobei das Verfahren umfasst:
- Bereitstellen von mindestens zwei Auswahlvorrichtungen zum Auswählen von Objekten auf dem Bildschirm;
**gekennzeichnet**
- **dadurch, dass** die mindestens zwei Auswahlvorrichtungen unabhängig sind;
- durch Platzieren einer Fokus-Markierung um ein Feld auf einem Bildschirm (31, 32, 33, 34) herum, wobei die Fokus-Markierung zwischen Bildschirmbereichen (31, 32, 33, 34) unter Verwendung einer ersten der unabhängigen Auswahlvorrichtungen bewegbar ist; und
- durch Beschränken der zweiten Auswahlvorrichtung darauf, nur auf Objekten in dem durch die Fokus-Markierung angegebenen Bildschirmbereich zu arbeiten.

17. Verfahren nach Anspruch 16, weiter umfassend:
- Anzeigen eines Objektmenü-Icons, das mit dem Bildschirm verknüpft ist, sichtbar zu allen Zeiten der Anzeige.

18. Verfahren nach Anspruch 17, wobei das Objektmenü-Icon mehrere Icons einschließt, von denen jedes mit verschiedenen Objekten auf dem Bildschirm verknüpft ist.

19. Verfahren nach irgendeinem der Ansprüche 16 bis 18, wobei die Auswähler einen Touchscreen und virtuelle Tasten einschließen.

20. Verfahren nach irgendeinem der Ansprüche 16 bis 19, weiter umfassend:
- Übertragen von Benutzer-Auswahlinformation an einen Server (28);
- Rückantworten an das Endgerät (20) durch den Server (28); und
- Lokalisieren und Analysieren der Auswahlantwortinformation vor dem Rückantworten an das Endgerät (20).

21. Verfahren nach irgendeinem der Ansprüche 16 bis 20, wobei das Endgerät (20) drahtlos mit einem Netzwerk verbunden ist.

22. Verfahren nach irgendeinem der Ansprüche 16 bis 21, weiter umfassend:
- Auswählen einer Informationsvorlage und Lokalisieren und Analysieren der Auswahlinformationsantwort, um eine Endgerät-Anzeige in mehreren Größen zu unterstützen, bevor die Antwort an das Endgerät (20) zurückgesendet wird.

23. Verfahren nach irgendeinem der Ansprüche 16 bis 22, weiter umfassend:
- Auswählen einer Informationsvorlage und Lokalisieren und Analysieren der Auswahlinformationsantwort derart, dass eine Fokus-Markierung für das Endgerät unterstützt wird und zur Ansicht hinzugefügt wird, vor dem Rückantworten an das Endgerät.

24. Verfahren nach irgendeinem der Ansprüche 16 bis 23, weiter umfassend:
- eine Benutzerschnittstellen-Stilvorlage für die Verwendung, wenn der Bildschirm eines Dienstes erstellt wird, die von einem Management-Server heruntergeladen wird.

## Revendications

1. Dispositif de terminal sans fil (20) comprenant :
un écran (70) sur lequel des objets comprenant des icônes apparaissent ; et
au moins deux dispositifs sélecteurs permettant de sélectionner des objets à partir dudit écran (70) ;
**caractérisé :**
**en ce qu'**au moins les deux dispositifs sélecteurs sont indépendants ; et
par un moyen de marqueur de foyer pour placer un marqueur de foyer autour d'un champ sur ledit écran (31, 32, 33, 34), le marqueur de foyer étant mobile entre des zones d'écran (21, 32, 33, 34) en utilisant un premier desdits dispositifs sélecteurs indépendants, où le second dispositif sélecteur fonctionne sur des objets uniquement au sein de la zone d'écran indiquée par le marqueur de foyer.

2. Dispositif selon la revendication 1, dans lequel lesdits deux sélecteurs comprennent un écran tactile et des touches virtuelles.

3. Dispositif selon la revendication 1 ou la revendication 2, dans lequel ledit écran affiche de manière visible une icône de menu objet à tout instant.

4. Dispositif selon la revendication 3, dans lequel ladite icône de menu objet comprend une pluralité d'icônes de menu objet, chacune associée à un objet séparé sur ledit écran.

5. Dispositif selon l'une quelconque des revendications précédentes, comprenant en outre une connexion sans fil à un point d'accès du réseau.

6. Dispositif selon l'une quelconque des revendications précédentes, dans lequel la taille de l'affichage terminal varie selon le type de terminal.

7. Système de communication, comprenant :
au moins un terminal sans fil (20) selon la revendication 1 ;
un point d'accès (42) en communication sans fil avec ledit terminal (20) et faisant partie d'un réseau ;
un serveur (28) connecté audit réseau.

8. Système de communication selon la revendication 7, comprenant en outre une connexion de l'un du point d'accès (42) et du serveur (28) à Internet (26).

9. Système de communication selon la revendication 7 ou la revendication 8, dans lequel en réponse aux informations de sélection transférées du terminal (20) au serveur (28), le serveur (28) répond au terminal (20), avec un modèle de page approprié dans lequel une localisation et une analyse syntaxique de composant accomplies avant une réponse aux informations de sélection sont envoyées au terminal (20).

10. Système de communication selon l'une quelconque des revendications 7 à 9, dans lequel une icône de menu objet est fournie sur un écran dudit terminal sans fil avec un objet associé.

11. Système de communication selon la revendication 10, dans lequel les icônes de menu objet associées à une pluralité d'objets sont visibles en même temps.

12. Système de communication selon l'une quelconque des revendications 7 à 11, dans lequel l'icône de menu objet amène un retour audio à être joué dans le terminal lorsque l'icône est sélectionnée pour être ouverte.

13. Système de communication selon l'une quelconque des revendications 7 à 12, dans lequel les informations de sélection sont transférées du terminal (20) au serveur (28) en appliquant une application de navigateur entre une connexion de terminal (20) et de serveur (28).

14. Système de communication selon l'une quelconque des revendications 7 à 13, dans lequel les informations de sélection peuvent être traitées en format HTML dans le terminal (20) avant qu'elles ne soient envoyées au serveur (28).

15. Système de communication selon l'une quelconque des revendications 7 à 14, comprenant en outre : un service qui peut être sélectionné à partir d'une table des services qui peut être téléchargée à partir d'un serveur de gestion.

16. Procédé de sélection d'articles sur un écran d'un dispositif de terminal sans fil (20), dans lequel des objets comprenant des icônes apparaissent sur l'écran, le procédé comprenant les étapes consistant à :
fournir au moins deux dispositifs sélecteurs pour sélectionner les objets à partir dudit écran;
**caractérisé :**
**en ce que** les au moins deux dispositifs sélecteurs sont indépendants ;
en plaçant un marqueur de foyer autour d'un champ sur un écran (31, 32, 33, 34), le marqueur de foyer étant mobile entre des zones d'écran (31, 32, 33, 34) en utilisant un premier desdits dispositifs sélecteurs indépendants ; et
en limitant le second dispositif sélecteur pour qu'il fonctionne sur des objets uniquement au sein de la zone d'écran indiquée par le marqueur de foyer.

17. Procédé selon la revendication 16, comprenant en outre l'étape consistant à :
afficher une icône de menu objet associée audit écran dudit affichage de manière visible à tout instant.

18. Procédé selon la revendication 17, dans lequel ladite icône de menu objet comprend une pluralité d'icônes, chacune associée à des objets différents sur ledit écran.

19. Procédé selon l'une quelconque des revendications 16 à 18, dans lequel lesdits sélecteurs comprennent un écran tactile et des touches virtuelles.

20. Procédé selon l'une quelconque des revendications 16 à 19, comprenant en outre les étapes consistant à :
transférer les informations de sélection d'utilisateur vers un serveur (28) ;
ledit serveur (28) répondant audit terminal (20) ;
localiser et effectuer une analyse syntaxique desdites informations de réponse de sélection avant de répondre audit terminal (20).

21. Procédé selon l'une quelconque des revendications 16 à 20, dans lequel le terminal (20) est connecté sans fil à un réseau.

22. Procédé selon l'une quelconque des revendications 16 à 21, comprenant en outre l'étape consistant à :
sélectionner un modèle d'information et localiser et effectuer une analyse syntaxique des informations de réponse de sélection, de façon à supporter un affichage de taille multiple du terminal, avant que la réponse ne soit envoyée audit terminal (20).

23. Procédé selon l'une quelconque des revendications 16 à 22, comprenant en outre l'étape consistant à :
sélectionner un modèle d'information et localiser et effectuer une analyse syntaxique des informations de réponse de sélection de telle manière qu'un marqueur de foyer est supporté pour le terminal et ajouté à la vue avant de répondre audit terminal.

24. Procédé selon l'une quelconque des revendications 16 à 23, comprenant en outre :
un modèle de style interface utilisateur à utiliser lorsque l'écran d'un service est effectué, qui est téléchargé à partir d'un serveur de gestion.
